# EUROPÄISCHE PATENTSCHRIFT

(11) **EP 3 865 343 B1**
(45) Veröffentlichungstag und Bekanntmachung des Hinweises auf die Patenterteilung: **26.02.2025**
(21) Anmeldenummer: 21152213.1
(22) Anmeldetag: 19.01.2021
(51) Int. Cl.: B60N 3/02, B61D 37/00

(54) **FAHRZEUG ZUR PERSONENBEFÖRDERUNG, MIT WENIGSTENS EINER HALTESTANGE**
PASSENGER TRANSPORT VEHICLE WITH AT LEAST ONE HOLDING BAR
VÉHICULE DE TRANSPORT DES PERSONNES, POURVU D'AU MOINS UNE TIGE DE MAINTIEN

(30) Priorität: 14.02.2020 DE 102020201881
(43) Veröffentlichungstag der Anmeldung: 18.08.2021
(73) Patentinhaber: Siemens Mobility GmbH, 81739 München (DE)
(72) Erfinder: Weiler, Joachim, 41849 Wassenberg-Orsbeck (DE); Kock, Melvin, 47533 Kleve (DE); Risseler, Udo Kurt, 34311 Naumburg (DE)
(74) Vertreter: Siemens Patent Attorneys

(56) Entgegenhaltungen:
- DE-A1- 2 015 107
- GB-A- 886 568
- GB-A- 937 692

## Beschreibung

Die Erfindung bezieht sich auf ein Fahrzeug zur Personenbeförderung nach dem Oberbegriff von Anspruch 1. Danach ist ein Fahrzeug mit wenigstens einer Haltestange vorgesehen, die mit ihrem einen Ende an einen Dachbereich und ihrem anderen Ende an einen Bodenbereich des Fahrzeugs angebunden ist, wobei eines der beiden Enden der Haltestange über ein Loslager angebunden ist, das eine Translation der Haltestange in ihrer Längsrichtung gestattet.

Ein solches Fahrzeug ist beispielsweise aus der GB 886 568 A bekannt.

Insbesondere bei Schienenfahrzeugen zu Personenbeförderungszwecken ist bei der Integration von Haltestangen darauf zu achten, dass diese einen Fahrzeugrohbau, an den typischerweise die beiden Enden der jeweiligen Haltestangen angebunden sind, aber auch andere beteiligte Innenausbau-Komponenten nicht unnötig verspannen. Damit sollen negative Einflüsse auf das strukturelle und dynamische Verhalten des Fahrzeugrohbaus vermieden werden. Zu diesem Zweck ist es bekannt, ein Ende einer Haltstange mittels eines Loslagers anzubinden.

Die Entkopplung von Haltestangen von dem Fahrzeugrohbau hinsichtlich der Übertragung von Kräften stellt explizit dann eine große Herausforderung dar, wenn die Haltestangen vertikal, d.h. zwischen einem Dach- und einem Bodenbereich des Fahrzeugs, angeordnet sind und eine Neigung aufweisen. Aus Bewegungen des Wagenkastens des Fahrzeugs können somit Verschiebungen in alle Raumrichtungen resultieren, wodurch Verformungen und/oder Verspannungen der beteiligten Komponenten auftreten können.

Ausgehend hiervon liegt der Erfindung die Aufgabe zugrunde, ein Fahrzeug der eingangs genannten Art derart weiterzuentwickeln, dass die Haltestange, auch wenn sie eine Neigung aufweist, derart gelagert ist, dass Verspannungen z. B. eines Fahrzeugrohbaus wirksam vermindert sind.

Diese Aufgabe wird durch ein Fahrzeug mit den Merkmalen des Anspruchs 1 gelöst. Danach zeichnet sich das eingangs beschriebene Fahrzeug dadurch aus, dass das Loslager eine Rotation der Haltestange um eine Längsachse und eine Querachse des Fahrzeugs gestattet, und das andere Ende der Haltestange drehfest über ein elastisches Lager angebunden ist, das Kippbewegungen der Haltestange gestattet, wobei die Haltestange über ein Zwischenstück mit einem unteren Lager fest verbunden ist.

Das Loslager gestattet somit sowohl eine Translation der Haltestangen in ihrer Längsrichtung als auch an eine Rotation der Haltestangen um eine Längsachse und eine Querachse des Fahrzeugs, während typischerweise in Längs- oder Querrichtung eines Wagenkastens eines (Schienen-)Fahrzeugs wirkende Kräfte übertragen werden. Demgegenüber ist das andere Ende der Haltestange im Wesentlichen drehfest über ein elastisches Lager angebunden. Dieses gestattet Kippbewegungen und ermöglicht einen geeigneten Toleranzausgleich für die Anbindung der Haltestange am Fahrzeugrohbau. Dabei kann die Anbindung der Haltestange am Fahrzeugrohbau insbesondere auch indirekt, beispielsweise über Fahrgastsitze erfolgen, welche wiederum an eine Bodenplatte des Fahrzeugs angebunden sind. Ein unteres Ende der Haltestange ist über ein Zwischenstück mit einem unteren Lager fest verbunden.

Das Loslager weist bevorzugt einen Bolzen auf, der in einem Gelenklager axial geführt ist. In dieser Weise lassen sich die oben beschriebenen gewünschten Freiheitsgrade für die Haltestange im Bereich des Loslagers besonders günstig realisieren.

Das elastische Lager kann einen Bolzen aufweisen, der drehfest in eine hohlzylinderförmiges Elastomer-Zwischenstück eingesteckt ist. Der betreffende Bolzen kann sich dann um eine Längs- und eine Querachse des Fahrzeugs verkippen, so dass insbesondere auch Toleranzen ausgeglichen werden können.

Bevorzugt ist das Loslager an dem dem Dachbereich des Fahrzeugs zugewandten Ende der Haltestange und das elastische Lager an dem dem Bodenbereich zugewandten Ende der Haltestange vorgesehen.

Das elastische Lager ist vorteilhafterweise drehfest in eine starre Aufnahme eingesetzt, welche wiederum von einem Fußboden oder einem Sitz des Fahrzeugs gebildet sein kann. Insgesamt ist somit das mit dem elastischen Lager zusammenwirkende Ende der Haltestange drehfest gelagert, und zwar bevorzugt über das hohlzylinderförmige Elastomer-Zwischenstück und die Aufnahme.

Ein Ausführungsbeispiel der Erfindung wird nachfolgend unter Bezugnahme auf die Zeichnung noch näher erläutert. Es zeigen:
- Figur 1: eine Schnittansicht eines Schienenfahrzeugabschnitts, mit darin angeordneter Haltestange in ihrer Grundposition,
- Figur 2: eine Schnittansicht eines oberen Anbindungsbereichs der Haltestange von Fig. 1,
- Figur 3: eine Schnittansicht eines unteren Anbindungsbereichs der Haltestange von Figur 1,
- Figur 4: eine Schnittansicht des Schienenfahrzeugabschnitts von Fig.1, mit darin angeordneter Haltestange in einer gegenüber der Grundposition gekippten Position,
- Figur 5: eine Schnittansicht eines oberen Anbindungsbereichs der Haltestange von Fig. 1,
- Figur 6: eine Schnittansicht eines unteren Anbindungsbereichs der Haltestange von Figur 1.

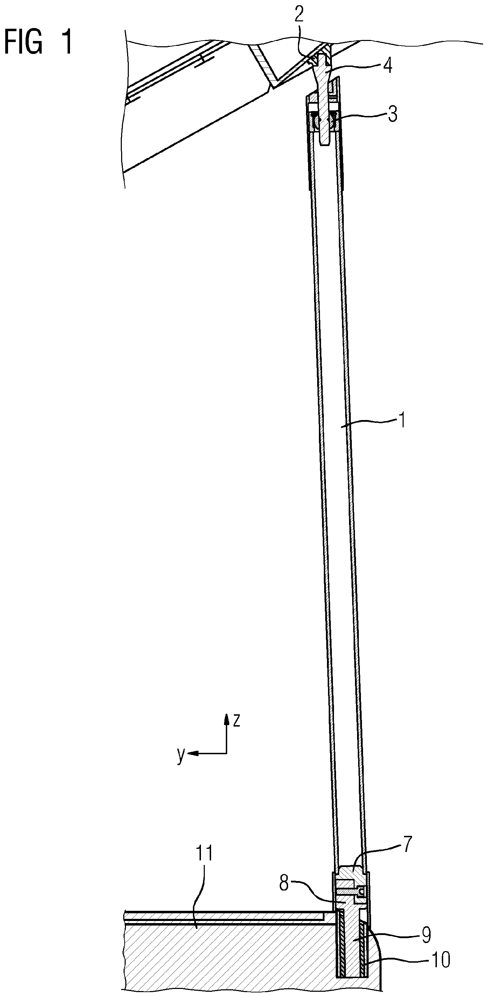

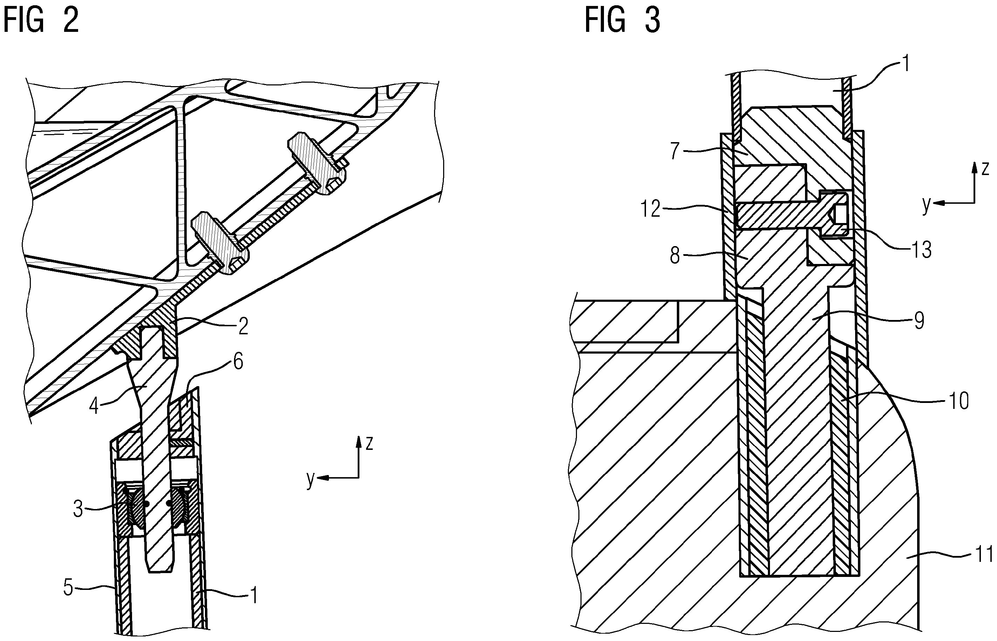

Aus Figur 1 geht die Anordnung und Befestigung einer Haltestange 1 in einem Schienenfahrzeug hervor. Die Haltestange 1 befindet sich in einer Grundposition gegenüber dem Fahrzeugrohbau, bei der keine Kräfte auf die Haltestange 1 ausgeübt werden. Die Haltestange 1 ist mit ihrem oberen Ende an einen Dachabschnitt 2 eines Fahrzeug-Rohbaus angebunden, und zwar über ein Gelenklager 3, das starr mit der Haltestange 1 verbunden ist, und einen Bolzen 4, dessen oberes Gewindeende in den Dachabschnitt 2 eingeschraubt ist. Das untere Ende des Bolzens 4 ist in dem Gelenklager 3 gelagert (vgl. Fig. 2).

Das Gelenklager 3 gestattet Translationsbewegungen der Haltestange 1 in ihrer Längsrichtung sowie Drehbewegungen der Haltestange 1 um eine Längsachse x (senkrecht zur Zeichenebene der Figuren) und eine Querachse y des Fahrzeugs. Nur in sehr geringfügigem Umfang sind Rotationen der Haltestange um die Hochachse z möglich. Demgegenüber ist die Kombination aus dem Bolzen 4 und dem Gelenklager 3 dazu geeignet, in Quer- und in Längsrichtung des Fahrzeugs Kräfte zwischen dem Fahrzeug-Rohbau und der Haltestange 1 zu übertragen.

Im Ergebnis realisieren der Bolzen 4 und das Gelenklager 3 ein Loslager für das obere Ende der Haltestange 1.

Figur 2 zeigt zudem eine Abdeckung 5 für dieses Loslager mit zugehörigen Haltern 6 für die Abdeckung 5.

Figur 3 veranschaulicht einen unteren Anbindungsbereich für die Haltestange 1. Es ist ersichtlich, dass ein unteres Ende der Haltestange 1 über ein Zwischenstück 7 mit einem unteren Lager 8 fest verbunden ist, und zwar im vorliegenden Ausführungsbeispiel mit Hilfe einer Verbindungsschraube 13.

Das untere Lager 8 ist elastisch ausgeführt, d.h. es erlaubt Kippbewegungen der Haltestange 1 sowohl um die Quer- als auch um die Längsachse des Fahrzeugs. Zu diesem Zweck umfasst das untere Lager 8 einen Bolzen 9, der drehfest in ein hohlzylinderförmiges Elastomer-Zwischenstück 10 eingesetzt ist. Das Elastomer-Zwischenstück 10 ist wiederum drehfest in eine starre untere Aufnahme 11 eingesetzt, bei der es sich im dargestellten Ausführungsbeispiel um einen Fahrgastsitz handelt. In anderen Ausführungen kann eine Aufnahme jedoch auch von einem Fußboden des Fahrzeugs oder auch anderweitigen, an einen Boden des Fahrzeugs angebundenen Komponenten gebildet sein.

Zur Verkleidung des Übergangsbereich zwischen dem unteren Lager 8 und der Haltestange 1 ist zudem eine Abdeckung 12 vorgesehen, welche von der unteren Aufnahme 11 bis hin zum unteren Ende der Haltestange 1 reicht.

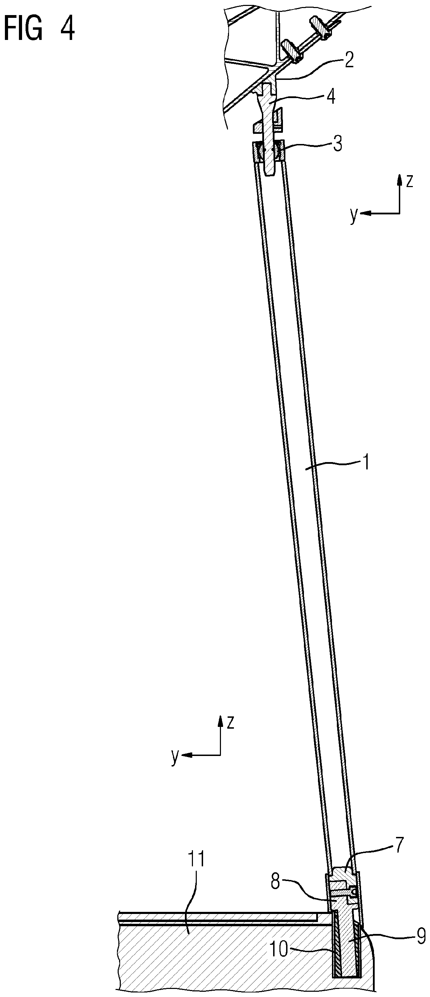

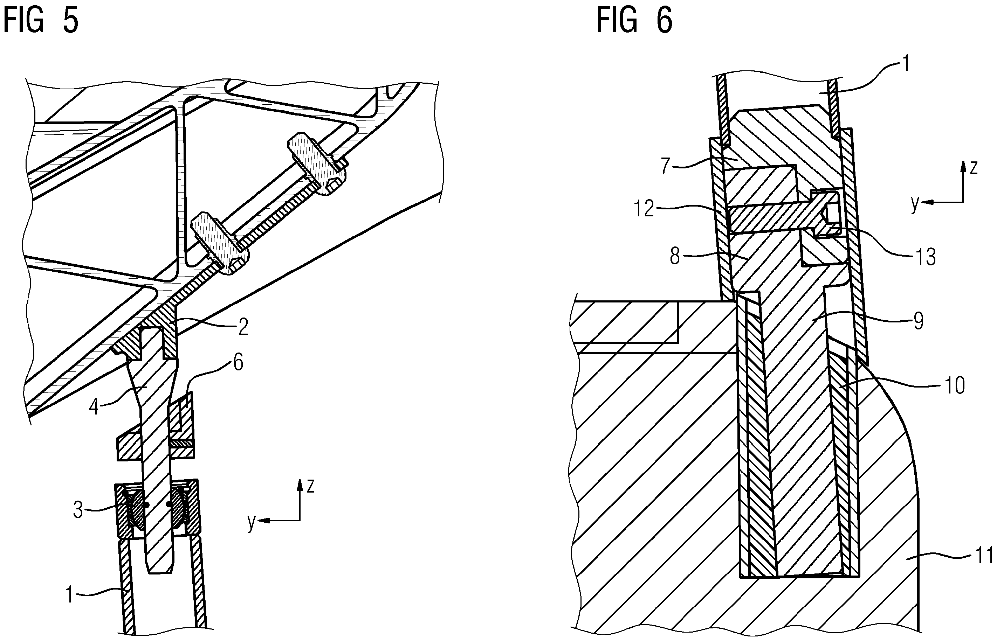

Die Darstellungen der Fig. 4 bis 6 entsprechen denjenigen der Figuren 1 bis 3, allerdings mit dem Unterschied, dass die Haltestange 1 aufgrund von Verformungen des Fahrzeugrohbaus, die im Betrieb des Fahrzeugs durch äußere Krafteinwirkung auftreten können, um die Längsachse x des Fahrzeugs gedreht ist. Dies ist insbesondere in Fig. 5 durch die deutliche Winkelstellung des Bolzens 4 zur Haltestange 1 und in Fig. 6 durch eine entsprechende Winkelstellung des Bolzens 9 des unteren Lagers 8 gegenüber dem Elastomer-Zwischenstück 10 und der unteren Aufnahme 11 erkennbar.

Zudem zeigt ein Übergang von Fig. 2 zu Fig. 5, dass die Haltestange eine Translationsbewegung im Wesentlichen in z-Richtung vollführt hat.

## Patentansprüche

1. Fahrzeug zur Personenbeförderung, mit wenigstens einer Haltestange (1), die mit ihrem einen Ende an einen Dachabschnitt (2) und mit ihrem anderen Ende an einen Bodenbereich des Fahrzeugs angebunden ist, wobei eines der beiden Enden der Haltestange (1) über ein Loslager angebunden ist, das eine Translation der Haltestange (1) in ihrer Längsrichtung gestattet, wobei
das Loslager eine Rotation der Haltestange (1) um eine Längsachse (x) und eine Querachse (y) des Fahrzeugs gestattet, **dadurch gekennzeichnet, dass** das andere Ende der Haltestange (1) drehfest über ein elastisches Lager angebunden ist, das Kippbewegungen der Haltestange (1) gestattet, wobei ein unteres Ende der Haltestange (1) über ein Zwischenstück (7) mit einem unteren Lager (8) fest verbunden ist.

2. Fahrzeug nach Anspruch 1,
**dadurch gekennzeichnet, dass**
das Loslager einen Bolzen (4) aufweist, der in einem Gelenklager (3) axial geführt ist.

3. Fahrzeug nach einem der Ansprüche 1oder 2,
**dadurch gekennzeichnet, dass**
das elastische Lager einen Bolzen (9) aufweist, der drehfest in ein hohlzylinderförmiges Elastomer-Zwischenstück (10) eingesteckt ist.

4. Fahrzeug nach einem der Ansprüche 1 bis 3,
**dadurch gekennzeichnet, dass**
das Loslager an dem dem Dachabschnitt (2) des Fahrzeugs zugewandten Ende der Haltestange (1) und das elastische Lager an dem dem Bodenbereich zugewandten Ende der Haltestange (1) vorgesehen ist.

5. Fahrzeug nach einem der Ansprüche 1 bis 4,
**dadurch gekennzeichnet, dass**
das elastische Lager drehfest in eine starre Aufnahme (11) eingesetzt ist.

6. Fahrzeug nach Anspruch 5,
**dadurch gekennzeichnet, dass**
die Aufnahme (11) von einem Fußboden oder einem Sitz des Fahrzeugs gebildet ist.

7. Fahrzeug nach Anspruch 2,
**dadurch gekennzeichnet, dass** die Haltestange (1) mit ihrem oberen Ende an dem Dachabschnitt des Fahrzeug-Rohbaus angebunden ist, und zwar über das Gelenklager (3) das starr mit der Haltestange (1) verbunden ist und dem Bolzen (4) dessen oberes Ende in den Dachanschnitt eingeschraubt ist.

8. Fahrzeug nach einem der Ansprüche 2 oder 7, dadurch ge-
kennzeichnet, dass das untere Ende des Bolzens (4) in dem Gelenklager (3) gelagert ist.

9. Fahrzeug nach einem der vorhergehenden Ansprüche,
**dadurch gekennzeichnet, dass** das untere Lager (8) das elastische Lager ist.

10. Fahrzeug nach einem der vorhergehenden Ansprüche, **dadurch gekennzeichnet, dass** zur Verkleidung des Übergangsbereich zwischen dem unteren Lager (8) und der Haltestange (1) eine Abdeckung (12) vorgesehen ist, welche von der unteren Aufnahme (11) bis hin zum unteren Ende der Haltestange (1) reicht.

## Claims

1. Passenger transport vehicle, with at least one holding bar (1), which is fastened with its one end to a roof section (2) and with its other end to a floor area of the vehicle, wherein one of the two ends of the holding bar (1) is fastened by means of a floating bearing that allows a translation of the holding bar (1) in its longitudinal direction, wherein
the floating bearing allows a rotation of the holding bar (1) around a longitudinal axis (x) and a lateral axis (y) of the vehicle, **characterised in that** the other end of the holding bar (1) is fastened in a torsion-resistant manner by means of an elastic bearing that allows tilting movements of the holding bar (1), wherein a lower end of the holding bar (1) is fixedly connected to a bearing (8) via an intermediate piece (7).

2. Vehicle according to claim 1,
**characterised in that**
the floating bearing has a bolt (4) that is guided axially in a joint bearing (3).

3. Vehicle according to one of claims 1 or 2,
**characterised in that**
the elastic bearing has a bolt (9) that is slotted into a hollow cylindrical elastomer intermediate piece (10) in a torsion-resistant manner.

4. Vehicle according to one of claims 1 to 3,
**characterised in that**
the floating bearing is provided on the end of the holding bar (1) facing towards the roof section (2) of the vehicle and the elastic bearing is provided on the end of the holding bar (1) facing towards the floor area.

5. Vehicle according to one of claims 1 to 4,
**characterised in that**
the elastic bearing is pushed into a rigid receptacle (11) in a torsion-resistant manner.

6. Vehicle according to claim 5,
**characterised in that**
the receptacle (11) is formed by a floor or a seat of the vehicle.

7. Vehicle according to claim 2,
**characterised in that** the holding bar (1) is fastened with its upper end to the roof section of the vehicle body shell, specifically by means of the joint bearing (3) that is rigidly connected to the holding bar (1) and to the bolt (4) whose upper end is screwed into the roof section.

8. Vehicle according to one of claims 2 or 7,
**characterised in that** the lower end of the bolt (4) is mounted in the joint bearing (3).

9. Vehicle according to one of the preceding claims, **characterised in that** the lower bearing (8) is the elastic bearing.

10. Vehicle according to one of the preceding claims, **characterised in that** a cover (12) is provided in order to enclose the transition region between the lower bearing (8) and the holding bar (1), the cover extending from the lower receptacle (11) all the way to the lower end of the holding bar (1).

## Revendications

1. Véhicule de transport des personnes, comprenant au moins une barre (1) de maintien, qui est reliée par l'une de ses extrémités à une partie (2) de toit et par son autre extrémité à une partie de plancher du véhicule, dans lequel l'une des deux extrémités de la barre (1) de maintien est reliée à un palier libre, qui autorise une translation de la barre (1) de maintien dans sa direction longitudinale, dans lequel le palier libre autorise une rotation de la barre (1) de maintien autour d'un axe (x) longitudinal et d'un axe (y) transversal du véhicule, **caractérisé en ce que** l'autre extrémité de la barre (1) de maintien est reliée d'une manière fixe en rotation par un palier élastique, qui autorise des mouvements de basculement de la barre (1) de maintien, dans lequel une extrémité inférieure de la barre (1) de maintien est reliée fixement à un palier (8) inférieur par une pièce (7) intermédiaire.

2. Véhicule suivant la revendication 1,
**caractérisé en ce que**
le palier libre a un boulon (4), qui est guidé axialement dans un appui (3) articulé.

3. Véhicule suivant l'une des revendications 1 ou 2,
**caractérisé en ce que**
le palier élastique a un axe (9), qui est enfiché de manière fixe en rotation dans une pièce (10) intermédiaire en élastomère en forme de cylindre creux.

4. Véhicule suivant l'une des revendications 1 à 3,
**caractérisé en ce que**
le palier libre est prévu à l'extrémité de la barre (1) de maintien tournée vers la partie (2) de toit du véhicule et le palier élastique à l'extrémité de la barre (1) de maintien tournée vers la partie de plancher.

5. Véhicule suivant l'une des revendications 1 à 4,
**caractérisé en ce que**
le palier élastique est inséré d'une manière fixe en rotation dans un logement (11) rigide.

6. Véhicule suivant la revendication 5,
**caractérisé en ce que**
le logement (11) est formé par un plancher ou un siège du véhicule.

7. Véhicule suivant la revendication 2,
**caractérisé en ce que** la barre (1) de maintien est, par son extrémité supérieure, reliée à la partie de toit du chaudron du véhicule et cela par l'appui (3) articulé, qui est relié rigidement à la barre (1) de maintien et au boulon (4), dont l'extrémité supérieure est vissée dans la partie de toit.

8. Véhicule suivant l'une des revendications 2 ou 7, **caractérisé en ce que** l'extrémité inférieure du boulon (4) est montée dans l'appui (3) articulé.

9. Véhicule suivant l'une des revendications précédentes, **caractérisé en ce que** le palier (8) inférieur est le palier élastique.

10. Véhicule suivant l'une des revendications précédentes, **caractérisé en ce que**, pour l'habillage de la partie de transition entre le palier (8) inférieur et la barre (1) de maintien, il est prévu un recouvrement (12), qui va du logement (11) inférieur jusqu'à l'extrémité inférieure de la barre (1) de maintien.
